(19) Europäisches Patentamt
European Patent Office
Office européen des brevets

(11) **EP 3 109 829 A1**

(12) **EUROPEAN PATENT APPLICATION**

(43) Date of publication:
**28.12.2016 Bulletin 2016/52**

(51) Int Cl.:
***G06T 15/00*** *(2011.01)*

(21) Application number: **16171160.1**

(22) Date of filing: **24.05.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.06.2015 US 201514746948**

(71) Applicant: **NXP USA, Inc.
Austin TX 78735 (US)**

(72) Inventors:
• **KRUTSCH, Robert Cristian
5656 AG Eindhoven (NL)**
• **BIBEL, Oliver
5656 AG Eindhoven (NL)**
• **SCHLAGENHAFT, Rolf
5656 AG Eindhoven (NL)**

(74) Representative: **Crawford, Andrew
NXP SEMICONDUCTORS UK LTD
Intellectual Property & Licensing
Red Central
60 High Street
Redhill, Surrey RH1 1SH (GB)**

(54) **APPARATUS AND METHOD FOR VERIFYING THE INTEGRITY OF TRANSFORMED VERTEX DATA IN GRAPHICS PIPELINE PROCESSING**

(57) The present application relates to an apparatus for verifying the integrity of transformed vertex data and a method of operating thereof. The apparatus comprises a graphics processing pipeline with a vertex shader unit, a buffer and a comparator unit. The vertex shader unit receives a stream of vertex data according to a vertex specification. The vertex shader unit applies a transformation on each of the vertices in the received stream of vertex data to and outputs a stream of transformed vertex data. The buffer is coupled to the vertex shader unit to buffer the transformed vertex data. The comparator is further configured to verify the integrity of at least a subset of the transformed vertex data on the basis of reference data and to issue a fault indication signal in case the verification fails.

Fig. 4

# Description

## Field of the invention

The present invention relates generally to the field of graphics processing and more specifically to a system and method for verifying the locations of GPU rendered objects in image space.

## Background

A typical computing system includes a central processing unit (CPU) and a graphics processing unit (GPU). Some GPUs are capable of very high performance using a relatively large number of small, parallel execution threads on dedicated programmable hardware processing units. The specialized design of such GPUs usually allows these GPUs to perform certain tasks, such as rendering 3-D scenes, much faster than a CPU. However, the specialized design of these GPUs also limits the types of tasks that the GPU can perform. The CPU is typically a more general-purpose processing unit and therefore can perform most tasks. Consequently, the CPU usually executes the overall structure of the software application and configures the GPU to perform specific tasks in the graphics pipeline (the collection of processing steps performed to transform 3-D images into 2-D images).

Such graphics processing units (GPUs) are performance optimized but lack fault detection and handling required for functional safety. Functional safety is a primary issue when displaying safety relevant information to a user. Safety relevant or safety related information represents information, an erroneous content of which might be directly responsible for death, injury or occupational illness, or the erroneous content of which may be the basis for decisions relied on, which might cause death, injury, other significant harms or other significant actions. Safety relevant or safety related information may be the output of safety critical application typically operated in a safety critical environment, which is one in which a computer software activity (process, functions, etc.) whose errors, such as inadvertent or unauthorized occurrences, failure to occur when required, erroneous values, or undetected hardware failures can result in a potential hazard, or loss of predictability of system outcome.

The lack of fault detection and handling required for functional safety in prior art graphics processing units (GPUs) may result in an unnoticed displaying of an erroneous or incomplete image, for example due to a fault in the hardware or software, which may result in a dangerous action for a user relying on the information conveyed by the wrong image.

Accordingly, what is needed in the art is a fault detection and handling required for functional safety for graphics processing units (GPUs) processing graphical content including safety relevant information to be presented to a user.

## Summary

The present invention provides an apparatus for verifying the integrity of transformed vertex data, a method of operating thereof and a non-transitory, tangible computer readable storage medium bearing computer executable instructions for verifying the integrity of transformed vertex data as described in the accompanying claims. Specific embodiments of the invention are set forth in the dependent claims. These and other aspects of the invention will be apparent from and elucidated with reference to the embodiments described hereinafter.

## Brief description of the drawings

The accompanying drawings, which are incorporated herein and form a part of the specification, illustrate the present invention and, together with the description, further serve to explain the principles of the invention and to enable a person skilled in the pertinent art to make and use the invention.

FIG. 1 schematically illustrates a block diagram of a computing system with a graphics processing subsystem according to an example of the present invention;

FIG. 2 schematically illustrates a block diagram of a graphics processing pipeline executed at the graphics processing subsystem as shown in FIG. 1 according to an example of the present invention;

FIG. 3 schematically illustrates a flow diagram of a transform process performed by a vertex shader of a graphics processing pipeline as shown in FIG. 2 according to an example of the present invention;

FIG. 4 schematically illustrates a block diagram of a comparator unit according to an example of the present invention showing the flow of data;

FIG. 5 illustrates a schematic dashboard display according to an example of the present invention;

FIG. 6 schematically illustrates a flow diagram relating to the functionality of the comparator unit of FIG. 4 according to an example of the present invention;

FIG. 7 schematically illustrates a further flow diagram relating to the functionality of the comparator unit of FIG. 4 according to an example of the present invention;

FIG. 8 schematically illustrates a further flow diagram relating to the functionality of the comparator unit of FIG. 4 according to an example of the present invention; and

FIG. 9 schematically illustrates the functionality of the comparator unit as exemplified with reference to FIG. 8 according to an example of the present invention.

**Detailed description**

Embodiments of the present disclosure will be described below in detail with reference to drawings. Note that the same reference numerals are used to represent identical or equivalent elements in figures, and the description thereof will not be repeated. The embodiments set forth below represent the necessary information to enable those skilled in the art to practice the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

In today's car instrument panels integrate information originating from various sources in from of graphical representations on one or more displays. Typical sources generating graphical representations may be classified in safety relevant sources and non-safety relevant sources. Safety relevant sources are sources, which generate graphical representations to be displayed to a user of the car, which convey safety relevant information to the car's user.

Safety relevant information generated by safety relevant sources may comprises information relating to, for example, the current velocity of the car, head lamp control, engine temperature , ambient environment, condition and status of a brake system including e.g. an anti-lock braking system (ABS) or an electronic brake-force distribution system (EBD), condition and status of an electrical steering system including e.g. an electronic stability control system (ESC), a traction control system (TCS) or anti-slip regulation system (ASR), or indications and status of advanced driver assistance systems (ADAS) including e.g. an adaptive cruise control (ACC) system, a forward collision warning (FCW) system, a lane departure warning (LDW) system, a blind spot monitoring (BSM) system, a traffic sign recognition (TSR) system, just to name a few.

Non-safety relevant information generated by non-safety relevant sources may comprises information relating to, for example, a navigation system, a multimedia system, and comfort equipment such as automatic climate control, just to name a few.

The information generated by safety and non-safety relevant sources are composed and presented in form of graphical representations on the one or more displays of the car. It is immediately understood that fault detection and handling required for functional safety have to be implemented allow detecting whether at least the graphical representations conveying safety relevant information are displayed completely and unaltered to the user of the car such. In particular, graphics processing units (GPU), which allow to efficiently generate complex graphical representations on displays, represent a major challenge for implementing fault detection and handling required for functional safety.

Although, the following description will exemplify the displaying of safety relevant information in the context of a dashboard display those skilled in the art will appreciate that the present application is not limited thereto. Rather, the present application is applicable to various use cases such as in the field of transportation including automotive, aviation, railway and space but also in industrial automation and medical equipment just to mention a few of use fields.

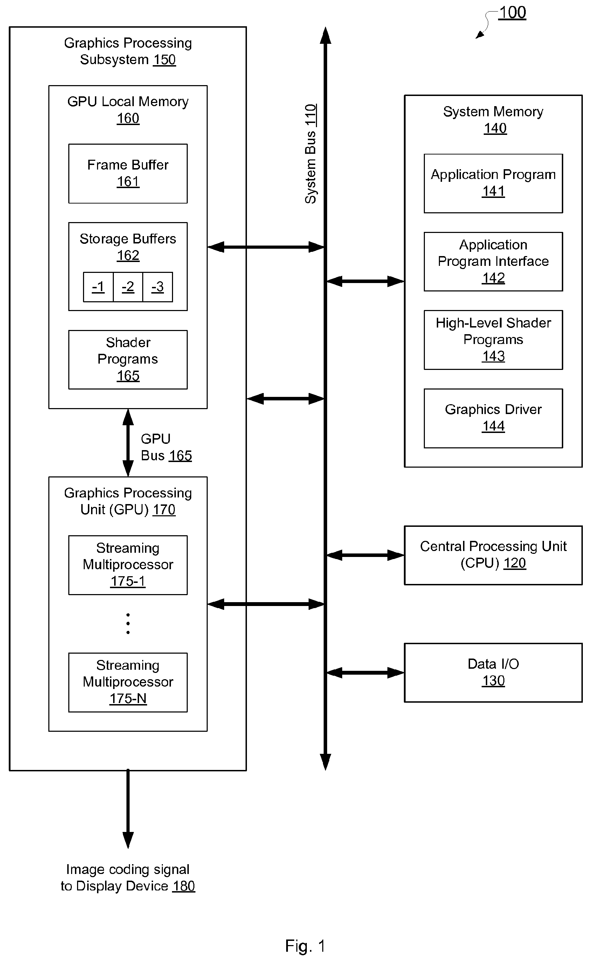

FIG. 1 shows is a schematic block diagram of a computing system 100 with a programmable graphics processing subsystem 150 according to an example of the present application. As shown, the computing system 100 includes a system data bus 110, a central processing unit (CPU) 120, one or more data input/output units 130, a system memory 140, and a graphics processing subsystem 150, which is coupled to a one or more display devices 180. In further examples, the CPU 120, at least portions of the graphics processing subsystem 150, the system data bus 110, or any combination thereof, may be integrated into a single processing unit. Further, the functionality of the graphics processing subsystem 150 may be included in a chipset or in some other type of special purpose processing unit or co-processor.

The system data bus 110 interconnects the CPU 120, the one or more data input/output units 130, the system memory 140, and the graphics processing subsystem 150. In further examples, the system memory 140 may connect directly to the CPU 120. The CPU 120 receives user input and/or signals from one or more the data input/output units 130, executes programming instructions stored in the system memory 140, operates on data stored in the system memory 140, and configures the graphics processing subsystem 150 to perform specific tasks in the graphics pipeline. For example, the CPU 120 may read a rendering method and corresponding textures a data storage, and configure the graphics processing subsystem 150 to implement this rendering method. The system memory 140 typically includes dynamic random access memory (DRAM) used to store programming instructions and data for processing by the CPU 120 and the graphics processing subsystem 150. The graphics processing subsystem 150 receives instructions transmitted by the CPU 120 and processes the instructions in order to render and display graphics images on the one or more display devices 180.

The system memory 140 includes an application program 141, an application programming interface (API) 142, high-level shader programs 143, and a graphics processing unit (GPU) driver 144. The application program 141 generates calls to the API 142 in order to produce a desired set of results, typically in the form of a sequence of graphics images. The application program 141 also transmits one or more high-level shading programs 143 to the API 142 for processing within the GPU driver 144. The high-level shading programs 143 are typically source code text of high-level programming instructions that are designed to operate on one or more shaders within the graphics processing subsystem 150. The API 142 functionality is typically implemented within the GPU driver 144. The GPU driver 144 is configured to translate the high-level shading programs 143 into machine code shading programs that are typically optimized for a specific type of shader (e.g., vertex, geometry, or fragment) of the graphics pipeline.

The graphics processing subsystem 150 includes a graphics processing unit (GPU) 170, a GPU local memory 160, and a GPU data bus 165. The GPU 170 is configured to communicate with the GPU local memory 160 via the GPU data bus 165. The GPU 170 may receive instructions transmitted by the CPU 120, process the instructions in order to render graphics data and images, and store these images in the GPU local memory 160. Subsequently, the GPU 170 may display certain graphics images stored in the GPU local memory 160 on the one or more display devices 180.

The GPU 170 includes one or more streaming multiprocessors 175-1 to 175-N. Each of the streaming multiprocessors 175 is capable of executing a relatively large number of threads concurrently. Particularly, each of the streaming multiprocessors 175 can be programmed to execute processing tasks relating to a wide variety of applications, including but not limited to linear and nonlinear data transforms, filtering of video and/or audio data, modeling operations (e.g. applying of physics to determine position, velocity, and other attributes of objects), and so on. Furthermore, each of the streaming multiprocessors 175 may be configured as one or more programmable shaders (e.g., vertex, geometry, or fragment) each executing a machine code shading program (i.e., a thread) to perform image rendering operations. The GPU 170 may be provided with any amount GPU local memory 160, including none, and may use GPU local memory 160 and system memory 140 in any combination for memory operations.

The GPU local memory 160 is configured to include machine code shader programs 165, one or more storage buffers 162, and a frame buffer 161. The machine code shader programs 165 may be transmitted from the GPU driver 144 to the GPU local memory 160 via the system data bus 110. The machine code shader programs 165 may include a machine code vertex shading program, a machine code geometry shading program, a machine code fragment shading program, or any number of variations of each. The storage buffers 162 are typically used to store shading data, generated and used by the shading engines in the graphics pipeline. E.g. the storage buffers 162 may comprise at least one of a vertex data buffer 162-1, a texture buffer 162-2 and a feedback buffer 162-3. The frame buffer 161 stores data for at least one two-dimensional surface that may be used to drive the display devices 180. Furthermore, the frame buffer 161 may include more than one two-dimensional surface. For instance the GPU 170 may be configured to render one two-dimensional surface while a second two-dimensional surface is used to drive the display devices 180.

The display devices 180 are one or more output devices capable of emitting a visual image corresponding to an input data signal. For example, a display device may be built using a cathode ray tube (CRT) monitor, a liquid crystal display, an image projector, or any other suitable image display system. The input data signals to the display devices 180 are typically generated by scanning out the contents of one or more frames of image data that is stored in the frame buffer 161.

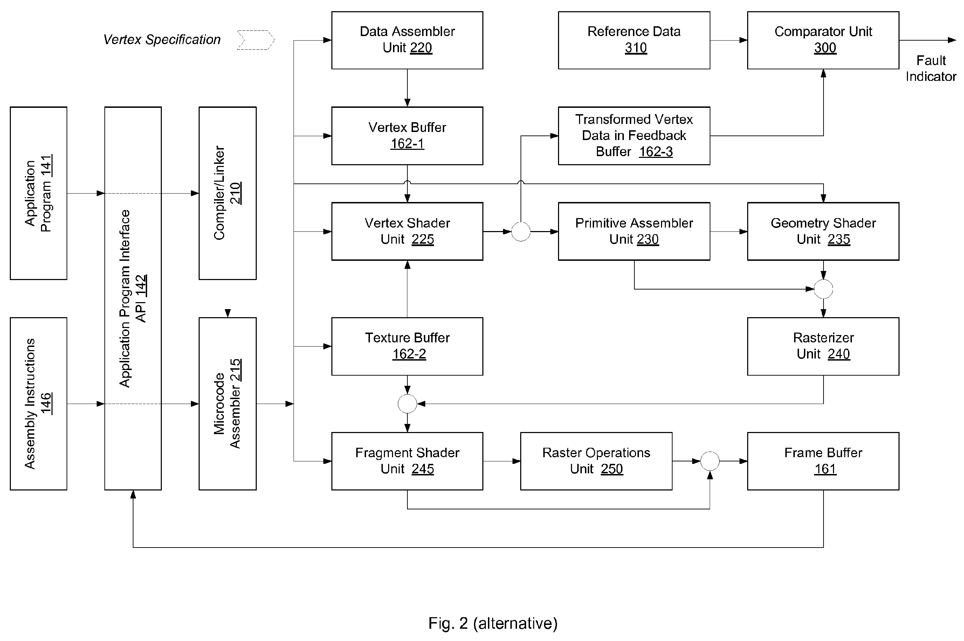

FIG. 2 shows a schematic block diagram of a programmable graphics pipeline 200 implementable within the graphics processing unit (GPU) 170 of the graphics processing subsystem 150 exemplified in FIG. 1, according to one example of the application.

As shown, the shader programming model 200 includes the application program 112, which transmits high-level shader programs to the graphics driver 144. The graphics driver 144 then generates machine code programs that are used within the graphics processing subsystem 150 to specify shader behavior within the different processing domains of the graphics processing subsystem 150.

The high-level shader programs transmitted by the application program 141 may include at least one of a high-level vertex shader program, a high-level geometry shader program and a high-level fragment shader program. Each of the high-level shader programs is transmitted through an API 142 to a compiler/linker 210 within the GPU driver 144. The compiler/linker 210 compiles the high-level shader programs 143 into assembly language program objects. Under shader programming model, domain-specific shader programs, such as high-level vertex shader program, high-level geometry shader program, and high-level fragment shader program, are compiled using a common instruction set target, supported by an instruction set library. With the instruction set, application developers can compile high-level shader programs in different domains using a core set of instructions. For example, compiler/linker 210 translates the high-level shader programs designated for different domains (e.g., the high-level vertex shader program, the high-level geometry shader program, and the high-level fragment shader program), which are written in high-level shading language, into distinct compiled software objects in the form of assembly code.

The program objects are transmitted to the microcode assembler 215, which generates machine code programs, including a machine code vertex shader program, a machine code geometry shader program and a machine code fragment shader program. The machine code vertex shader program is transmitted to a vertex processing unit 225 for execution. Similarly, the machine code geometry shader program is transmitted to a primitive processing / geometry shader unit 235 for execution and the machine code fragment shader program is transmitted to a fragment processing unit 245 for execution.

The compiler/linker 210 and the microcode assembler 215 form the hardware related driver layer of the graphics driver 144, which interfaces with the application program 141 through the application program interface, API, 142.

In an example of the present application, shader programs may be also transmitted by the application program 141 via assembly instructions 146. The assembly instructions 146 are transmitted directly to the GPU microcode assembler 215 which then generates machine code programs, including a machine code vertex shader program, a machine code geometry shader program and a machine code fragment shader program.

A data assembler 220 and the vertex shader unit 225 interoperate to process a vertex stream. The data assembler 220 is a fixed-function unit that collects vertex data for high-order surfaces, primitives, and the like, and outputs the vertex data to vertex shader unit 225. The data assembler 220 may gather data from buffers stored within system memory 140 and GPU local memory 160, such as the vertex buffer 162-1, as well as from API calls from the application program 141 used to specify vertex attributes. The data gather by the data assembler 220 are provided in accordance with a vertex specification defined by the application program 141. The vertex shader unit 225 is a programmable execution unit that is configured to execute a machine code vertex shader program, transforming vertex data as specified by the vertex shader programs. For example, vertex shader unit 225 may be programmed to transform the vertex data from an object-based coordinate representation (object space) to an alternatively based coordinate system such as world space or normalized device coordinates (NDC) space. The vertex shader unit 225 may read vertex attribute data directly from the GPU local memory 160. The vertex shader unit 225 may read texture map data as well as uniform data that is stored in GPU local memory 160 through an interface (not shown) for use in processing the vertex data. The vertex shader 225 represents the vertex processing domain of the graphics processing subsystem 150.

A primitive assembler unit 230 is fixed-function unit that receives transformed vertex data from vertex shader unit 225 and constructs graphics primitives, e.g., points, lines, triangles, or the like, for processing by the geometry shader unit 235 or the rasterizer unit 240. The constructed graphics primitives may include a series of one or more vertices, each of which may be shared amongst multiple primitives, and state information, such as a primitive identifier, defining the primitive. In alternative examples, a second primitive assembler (not shown) may be included subsequent to the geometry shader 235 in the data flow through the graphics pipeline 200. Each primitive may include a series of one or more vertices and primitive state information defining the primitive. A given vertex may be shared by one or more of the primitives constructed by the primitive assembly unit 230 throughout the graphics pipeline 200. For example, a given vertex may be shared by three triangles in a triangle strip without replicating any of the data, such as a normal vector, included in the given vertex.

The geometry shader unit 235 receives the constructed graphics primitives from the primitive assembler unit 230 and performs fixed-function viewport operations such as clipping, projection and related transformations on the incoming transformed vertex data. In the graphics processing subsystem 150, the geometry shader unit 235 is a programmable execution unit that is configured to execute machine code geometry shader program to process graphics primitives received from the primitive assembler unit 230 as specified by the geometry shader program. For example, the geometry shader unit 235 may be further programmed to subdivide the graphics primitives into one or more new graphics primitives and calculate parameters, such as plane equation coefficients, that are used to rasterize the new graphics primitives. The geometry shader unit 235 may read data directly from the GPU local memory 160. Further, the geometry shader unit 235 may read texture map data that is stored in GPU local memory 160 through an interface (not shown) for use in processing the geometry data. The geometry shader unit 235 represents the geometry processing domain of the graphics processing subsystem 150. The geometry shader unit 235 outputs the parameters and new graphics primitives to a rasterizer unit 240. It should be noted that the geometry shader unit 235 is an optional unit of the graphics pipeline. The data processing of the geometry shader unit 235 may be omitted.

The rasterizer unit 240 receives parameters and graphics primitives from the primitive assembler unit 230 or the geometry shader unit 235. The rasterizer unit 240 is a fixed-function unit that scan-converts the new graphics primitives and outputs fragments and coverage data to the fragment shader unit 245.

The fragment shader unit 245 is a programmable execution unit that is configured to execute machine code fragment shader programs to transform fragments received from rasterizer unit 245 as specified by the machine code fragment shader program. For example, the fragment shader unit 245 may be programmed to perform operations such as perspective correction, texture mapping, shading, blending, and the like, to produce shaded fragments that are output to a raster operations unit 250. The fragment shader unit 245 may read data directly from the GPU local memory 160. Further, the fragment shader unit 245 may read texture map data as well as uniform data that is stored in GPU local memory 160, such as the texture buffer 162-2, through an interface (not shown) for use in processing the fragment data. The raster operations unit 250 or per-fragment operations unit optionally performs fixed-function computations such as near and far plane clipping and raster operations, such as stencil, z test and the like, and outputs pixel data as processed graphics data for storage in a buffer in the GPU local memory 160, such as the frame buffer 161.

The vertex shader unit 225 outputs the transformed vertex data to the primitive assembler unit 225 and is further configured to output the transformed vertex data to a buffer, in particular a feedback buffer 162-3.

A vertex refers to a data structure, which describes position of a point in 2D or 3D space and further attributes associated therewith. A set of vertices defines the location of corners of one or more surfaces constructed of basic graphical elements, which are also denoted as primitives, and other attributes of the surfaces. Each object to be displayed is typically approximated as a polyhedral. A polyhedral a solid in three dimensions with flat faces, straight edges and sharp corners or vertices. The flat faces are joined at their edges. The flat faces are modeled as primitives, the corners of which are defined by a respective set of vertices. The set of vertices define inter alia the location and orientation of the primitive in space. The attributes of a vertex may include a color value at the vertex point, a reflectance value of the surface at the vertex, one or more textures and texture coordinates of the surface at the vertex, and the normal of an approximated curved surface at the location of the vertex. The vertex data is provided as an ordered list of vertices, a vertex stream, to the graphics pipeline described herein. The interpretation of the stream of vertices associates each vertex with one or more primitives out of a list of predefined primitives supported by the graphics processing pipeline, such as e.g. a point primitives, line primitives, polygon primitives, triangle primitives, quad primitives and variants thereof.

From the above description, it is understood that the vertex shader unit 225, which is arranged to transform each vertex defining a point in the application or object (coordinate) space into the window (coordinate) space, determines the position of the primitives in the finally outputted image. Erroneous transformation of the vertices, e.g. due to a hardware error and/or an error in the vertex shader program, may result e.g. in a covering or misarrangement of one or more parts of a displayed object. In case such an erroneous displayed object is part of a graphical representation relating to a safety relevant information, a critical and potential hazardous situation may occur due to unrecognizability or unreadability of the safety critical information by the address user and/or misrepresentation (e.g. displaying of a wrong value) of the safety critical information to the addressed user.

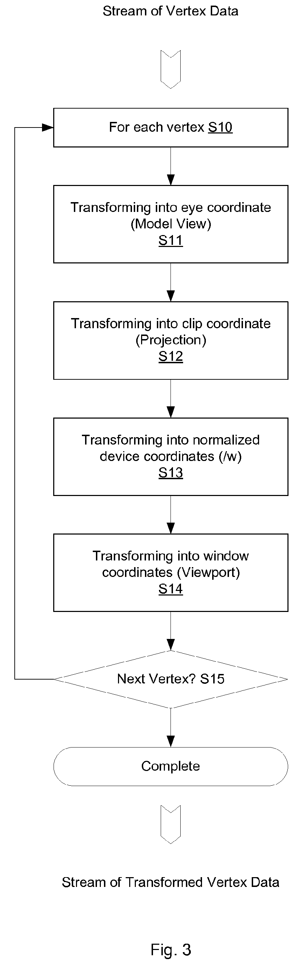

Referring now to FIG. 3, an illustrative vertex transformation in accordance with an example of the present invention will be described in more detail. The vertex transformation executed by the vertex shader unit 225 includes a transformation of the vertex coordinates in the application or object space into coordinates in the viewport or window space. In a first stage, the vertex object coordinates, which are also termed object coordinates, are supplied to a model view stage S11. In the model view stage S11, a Model-View Matrix is applied to these coordinates to yield eye coordinates. In a projection stage S12, a Projection Matrix is applied to the eye coordinates to yield clip coordinates. In a division (/w) stage S13, a perspective division is carried out on the clip coordinates to yield normalized device coordinates. In a final viewport stage S14, a transformation is applied to the normalized device coordinates utilizing a Viewport Transformation Matrix to convert these coordinates into window coordinates. The transformation operations are applied to each vertex in the supplied stream of vertex data. The transformation operations applied to each of the vertices in the input stream yield a stream of transformed vertex data.

The equations used to perform the steps discussed above with respect to FIG. 2b will now be discussed in order to demonstrate the manner in which the various coordinate sets are transformed. Object coordinate sets, eye coordinate sets, and clip coordinate sets are four dimensional coordinate sets for the sake of explanation. Each set consists of x, y, z and w coordinates, which define a vertex of a primitive being processed. The w coordinate contains the perspective information. Thus, the Model-View and Projection matrices are $4 \times 4$ matrices. Given a vertex defined in object coordinates as $(x_{obj}, y_{obj}, z_{obj}, w_{obj})^T$ and a Model-View matrix defined as $M_{ModelView}$, the eye coordinates of the vertex are obtained from the following equation:

$$\begin{pmatrix} x_{eye} \\ y_{eye} \\ z_{eye} \\ w_{eye} \end{pmatrix} = [M_{ModelView}^{-1}]^T \begin{pmatrix} x_{obj} \\ y_{obj} \\ z_{obj} \\ w_{obj} \end{pmatrix}$$

where $(x_{eye}, y_{eye}, z_{eye}, w_{eye})^T$ are the eye coordinates. Similarly, given a Projection Matrix defined as $M_{Projection}$, the clip coordinates of the vertex are obtained from the following equation:

$$\begin{pmatrix} x_{clip} \\ y_{clip} \\ z_{clip} \\ w_{clip} \end{pmatrix} = M_{Projection} \begin{pmatrix} x_{eye} \\ y_{eye} \\ z_{eye} \\ w_{eye} \end{pmatrix}$$

where $(x_{clip}, y_{clip}, z_{clip}, w_{clip})^T$ are the clip coordinates. The normalized device coordinates $(x_{ndc}, y_{ndc}, z_{ndc})^T$ of the vertex are then obtained from the following equation by perspective division:

$$\begin{pmatrix} x_{ndc} \\ y_{ndc} \\ z_{ndc} \end{pmatrix} = \begin{pmatrix} x_{clip}/w_{clip} \\ y_{clip}/w_{clip} \\ z_{clip}/w_{clip} \end{pmatrix}$$

where $x_{ndc}, y_{ndc}, z_{ndc} \in [-1, +1]$. Finally, the normalized device coordinates are mapped into window coordinates using the Viewport Transformation Matrix. The dimensions of the Viewport Transformation Matrix depend on the viewport size. The window coordinates of the vertex, $(x_w, y_w, z_w)^T$, are then determined from the following equation:

$$\begin{pmatrix} x_w \\ y_w \\ z_w \end{pmatrix} = \begin{pmatrix} \frac{w}{2}x_{ndc} + \left(x + \frac{w}{2}\right) \\ \frac{h}{2}y_{ndc} + \left(x + \frac{h}{2}\right) \\ \frac{f-n}{2}z_{ndc} + \frac{f+n}{2} \end{pmatrix}$$

This means that

$$\begin{pmatrix} x_{ndc} \\ y_{ndc} \\ z_{ndc} \end{pmatrix} = \begin{pmatrix} -1 \\ -1 \\ -1 \end{pmatrix} \quad \rightarrow \quad \begin{pmatrix} x_w \\ y_w \\ z_w \end{pmatrix} = \begin{pmatrix} x \\ y \\ n \end{pmatrix}$$

and

$$\begin{pmatrix} x_{ndc} \\ y_{ndc} \\ z_{ndc} \end{pmatrix} = \begin{pmatrix} +1 \\ +1 \\ +1 \end{pmatrix} \quad \rightarrow \quad \begin{pmatrix} x_w \\ y_w \\ z_w \end{pmatrix} = \begin{pmatrix} x+w \\ y+h \\ f \end{pmatrix}$$

where $x_{ndc} \in [x, x+w]$, $y_{ndc} \in [y, y+h]$ and $z_{ndc} \in [n, f]$. The variables h and w define the size of the viewport window and the variables x and y offsets. The variables n and f correspond to the near and far z ranges of the primitive, respectively.

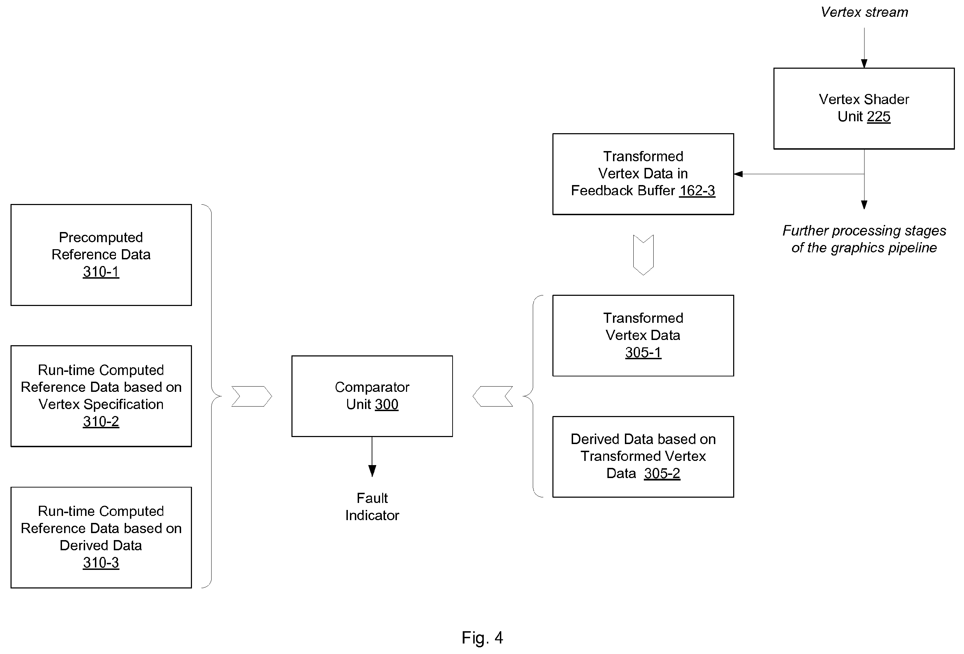

Referring now to FIG. 4, in order to allow for verifying the transformed vertices output by the vertex shader unit 225, at least a part of the transformed vertices further processed at the subsequent stages of the graphics processing pipeline is additionally stored in a buffer such as a feedback buffer 162-3.

At least a subset of the transformed vertex data stored in the feedback buffer 162-3 is compared with reference data. The transformed vertex data stored in the feedback buffer 162-3 may be partitioned into one or more subsets of transformed vertex data. One, several or all subsets of transformed vertex data is compared with corresponding reference data at a comparator unit 300, which is arranged to output a fault indication signal in case the comparison of the transformed vertex data or at least a subset thereof and corresponding reference data do not match with each other.

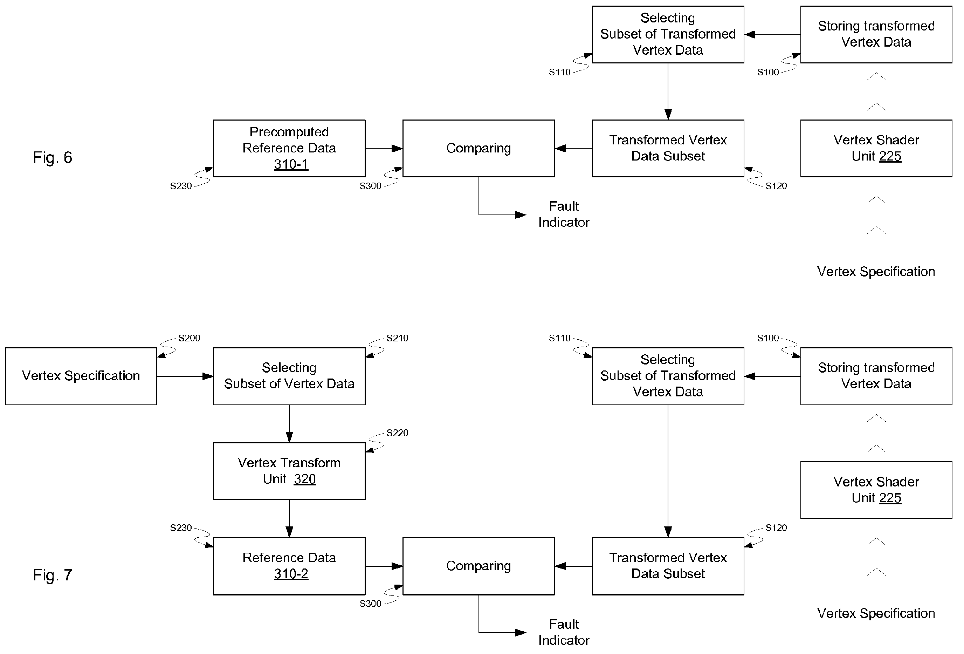

The reference data may comprise precomputed reference data 310-1. Reference data may be precomputed in case the image generated by the graphics pipeline comprises for instance static image parts defined on the basis of static vertex data and primitives associated therewith. The functionality of the comparator 300 and the comparing with precomputed reference data 310-1 will be further described in detail with reference to FIG. 6.

The reference data may comprise reference data 310-2 computed at run-time. Reference data may be computed at run-time in case the image generated by the graphics pipeline comprises for instance dynamic image parts defined on the basis of dynamic vertex data and primitives associated therewith. The dynamic vertex data are determined at run-time for instance in response to sensor input. The functionality of the comparator 300 and the comparing with run-time computed reference data 310-2 will be further described in detail with reference to FIG. 7.

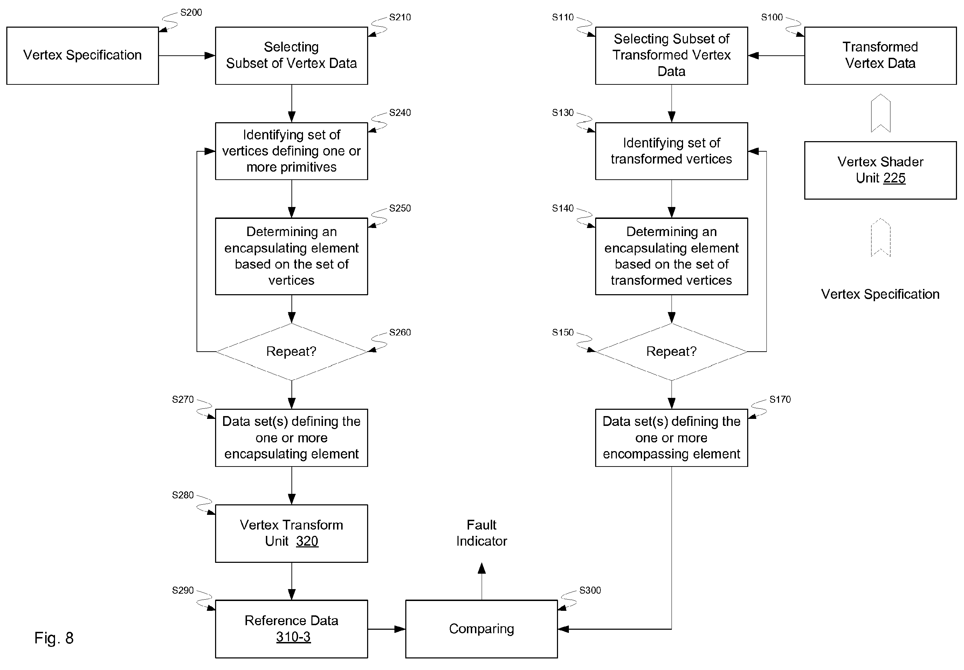

The reference data may comprise reference data 310-3 computed at run-time relating to one or more encapsulating elements, each of which encompasses one or more primitives defined by a set of vertices. The transformed vertex data stored in the feedback buffer 162-3 is analyzed to identify a set of vertices, which defines one or more primitives. An encapsulating element is determined, which encompasses the one or more primitives. At the comparator, data sets defining the encapsulating elements are compared to determine whether the primitives defined by the transformed vertices are located within the space defined by the encapsulating elements. The functionality of the comparator 300 and the comparing with run-time computed reference data 310-3 relating to encapsulating elements will be described in detail with reference to FIG. 8.

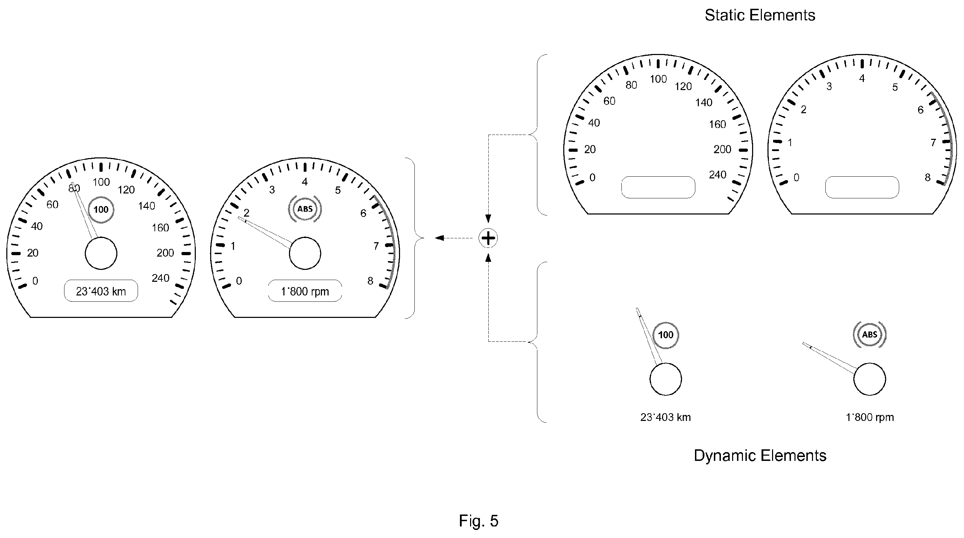

Referring now to FIG. 5, a car's dashboard is schematically illustrated. As aforementioned, the instrumentation of dashboards are replaced by displays, at which the instruments are presented to the car's user as one or more graphic images. For the sake of illustration, the exemplified dashboard comprises a speedometer, a rev counter and an indication of the traffic sign recognition (TSR) system and an indication of the anti-lock braking system (ABS).

The illustrated dashboard image comprises static elements. For instance, the speedometer and the rev counter are composed of static elements comprising for instance label markings and labeling.

The illustrated dashboard image comprises dynamic elements. For instance, the needle graphics are generated on the basis of sensor input relating to the car's speed and the r.p.m of the engine. Each needle graphic may be defined on a set of vertices defining for instance a polygon. The sets of vertices are dynamically generated based on the car's speed and the engine's r.p.m. The dynamic elements further comprise the indications of the traffic sign recognition (TSR) system the anti-lock braking system (ABS). The indications may be provided in form of texture image data to be mapped on quad primitives by the fragment shader unit 245. Accordingly, sets of vertex data are dynamically generated defining the quad primitives, on which the respective texture image data is mapped.

The composition of the static and dynamic image elements results to the dashboard image displayed to the car's user. The composition of the static and dynamic image elements considers depth information in order to allow for overlying and underlying graphic elements with respect to each other.

Referring now to FIG. 6, a flow diagram is shown, which schematically illustrates the functionality of the comparator 300 and the comparing of a subset of transformed vertex data with pre-computed reference data according to an example of the present application.

The transformed vertex data output by the vertex shader unit 225 is stored in a buffer for comparison in an operation S100. The processing of the transformed vertex data by the graphics pipeline as described above may be continued uninterrupted. For comparison with pre-computed reference data, at least a subset of the transformed vertex data is selected in an operation S110. The subset of transformed vertex data is supplied to the comparator unit 300 in an operation S120.

Further, precomputed reference data 310-1 is supplied to the comparator unit 300 in an operation S230. The reference data 310-1 comprises a subset of transformed reference vertex data, the transformed vertices of which are provided as precomputed data for the comparison operation. The comparator unit 300 is arranged to compare the subset of transformed vertex data and the precomputed reference data 310-1 and to generate a fault indication signal in case the data do not match in an operation S300.

In order to precompute the reference data, the transform operation as performed by the vertex shader unit 225 is applied to a subset of reference vertex data, the vertices of which correspond to the vertices on the basis of which the subset of transformed vertex data has been generated by the vertex shader unit 225 of the graphics pipeline.

The precomputed reference data in particular comprise transformed reference vertex data defining primitives relating to one or more static image elements. The location of the one or more static image elements in the windows space is predetermined. Hence, the transformed reference vertex data can be computed in advance and provided as precomputed data for the comparison operation.

Referring now to FIG. 7, a flow diagram is shown, which schematically illustrates the functionality of the comparator 300 and the comparing of a subset of transformed vertex data with reference data computed at run-time according to an example of the present application.

The transformed vertex data output by the vertex shader unit 225 is stored in a buffer for comparison in an operation S100. The processing of the transformed vertex data by the graphics pipeline as described above may be continued uninterrupted. For comparison with reference data, at least a subset of the transformed vertex data is selected in an operation S110. The subset of transformed vertex data is supplied to the comparator unit 300 in an operation S120.

The reference data 310-2 to be supplied to the comparator unit 300 is computed at run-time.

In an operation S200, the vertex data of the vertex specification as supplied to the graphics pipeline is provided and at least a subset of vertex data is selected from the provided vertex data in an operation S210. The selected subset of vertex data based on the vertex specification forms the subset of reference vertex data. The vertices of the reference vertex data correspond to the untransformed vertices, on the basis of which the vertex shader unit 225 generates the subset of transformed vertex data stored in the buffer.

The subset of reference vertex data is supplied to a vertex transform unit 320, which is arranged to generate a subset of transformed reference vertex data on the basis thereof and to output the transformed reference vertex data in an operation S220. The vertex transform unit 320 is arranged to transform the supplied the subset of reference vertex data in application/object space into the subset of transformed reference vertex data in window/viewport space.

The vertex transform unit 320 may be under control of or implemented on the central processing unit 120 of the data processing system 100. The vertex transform unit 320 may be a software component run at the central processing unit 120. The vertex transform unit 320 is configured to perform the same transform operation as the vertex shader unit 225. The vertex transform unit 320 may operate on the basis of the high-level vertex shader program 143, on the basis of which the machine code vertex shader program is generated.

The vertex shader unit 225 may be used as vertex transform unit 320 for generating the subset of transformed reference vertex data. The subset of transformed reference vertex data may be generated in advance or after generation of the transformed vertex data. A subset of streaming processors 175 may be allocated to generate the transformed vertex data as part of the graphics pipeline processing of the vertex data and at least the remaining part of the streaming processors 175 may be allocated to generate the transformed reference vertex data such that the transformed vertex data and the transformed reference vertex data are generated at substantially the same time.

Further, the subset of transformed reference vertex data is supplied as reference data 310-2 to the comparator unit 300 in an operation S230. The comparator unit 300 is arranged to compare the subset of transformed vertex data and the precomputed reference data 310-2 and to generate a fault indication signal in case the data do not match in an operation S300.

The generation of reference data at run-time is in particular applicable to allow verification of dynamically created image elements such as the dynamic elements described with reference to FIG. 5 for the sake of explanation.

Referring now to FIG. 8, a flow diagram is shown, which schematically illustrates the functionality of the comparator 300 and the comparing of a subset of transformed vertex data with reference data on the basis of encapsulating elements according to an example of the present application. Encapsulating elements are based on a simplification model. As those skilled in the art, the above described generation of the reference data at run-time is resource demanding and computational expensive in particular in case of complex objects requiring a high number of vertices. In such a case, the computational resources to generate the reference data at run-time may be not available.

In order to reduce the required computational resources, instead of comparing at least a subset of transformed vertex data with run-time generated reference data, one or more encapsulating elements are defined, each of which replace a set of transformed vertices of the subset defining one or more primitives with a encapsulating element defined on the basis of a reduced number of vertices. The encapsulating elements allow to verify whether the transformed vertices of the set thereof are located in the intended region of the window space. Such an encapsulating element is in particular definable on the basis of a base point and a vector in the application/object space and viewport/window space, respectively. The base point defines a two or three dimensional coordinate in space and the vector defines the dimension of the encapsulating element in the two or three dimensional space.

For instance, an ellipsoid or ellipse may be used as encapsulating element. The ellipsoid or ellipse is definable by a center point coordinate and a vector relating to the semi-axes of the ellipsoid or ellipse. Further, a (rectangular) bounding box may be used as encapsulating element. The bounding box is definable by a point coordinate to one or the corners of the bounding box and a vector to the opposing edge passing through the center of the bounding box.

The encapsulating element may be a circumscribed element with minimal volume and area, respectively or the encapsulating element may be an inscribed element with maximal volume and area, respectively.

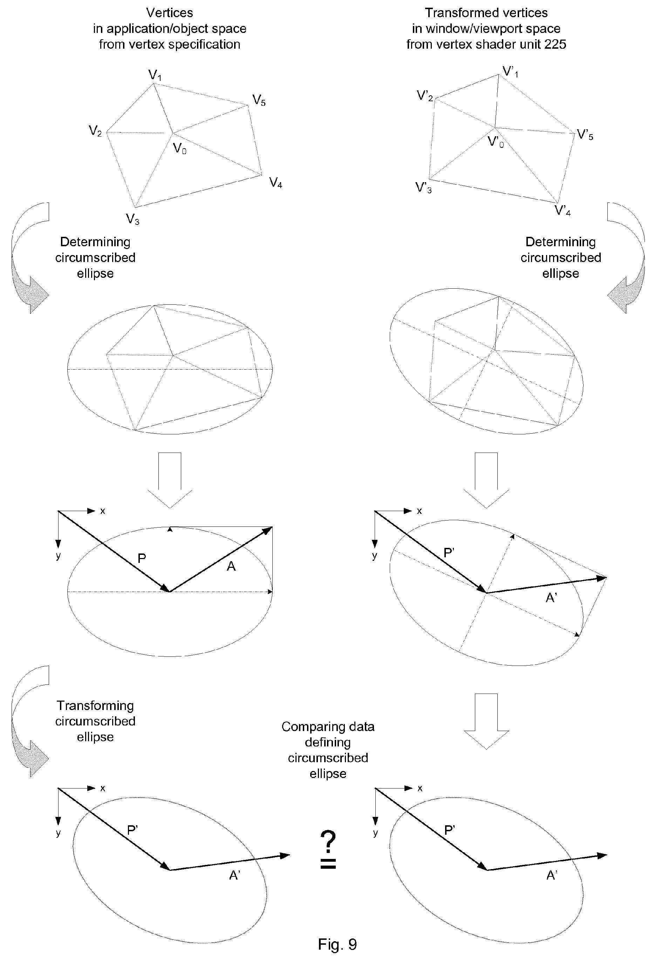

For the sake of explanation, references will be also made to FIG. 9, which schematically illustrates a circumscribed two dimensional ellipse circumscribing a set of vertices defining a fan of triangles on the basis of the vertices $V_0$ to $V_5$. It should be noted that a fan of N triangles requires 2+n vertices.

The transformed vertex data output by the vertex shader unit 225 is stored in a buffer for comparison in an operation S100. The processing of the transformed vertex data by the graphics pipeline as described above may be continued uninterrupted. For comparison with reference data, at least a subset of the transformed vertex data is selected in an operation S110.

On the basis of the subset of transformed vertex data, a set of vertices is identified in an operation S130, which define one or more primitives. Starting from the set of identified set of vertices, an encapsulating element such as a circumscribed ellipsoid/ellipse or two/three dimensional bounding box is determined on the basis of a data set defining the location of the encapsulating element in window/viewport space of the transformed vertex data in an operation S140. A data set defining the encapsulating element is determined.

The operations of identifying a set of vertices and determining an encapsulating element may be repeated in an operation S150.

In an operation S160, one or more data sets defining one or more encapsulating elements are provided to the comparator unit 300 for comparison.

As exemplified in the right-hand column of FIG. 9, the identified set of vertices comprises the transformed vertices $V'_0$ to $V'_5$ defining a fan of 5 tringles in window/viewport space. A circumscribed ellipse with minimal area is determined, which circumscribes the transformed vertices $V'_0$ to $V'_5$. The circumscribed ellipse can be defined by a base point $P'$ and a semi-axes vector $A'$. The data set comprising the base point $P'$ and the semi-axes vector $A'$ is determined on the basis of the transformed vertex data output by the vertex shader unit 225. The base point $P'$ and the semi-axes vector $A'$ represented the data set defining the circumscribed ellipse in window/viewport space. The data set is provided for comparison by the comparator unit 300 with reference data 310-3.

The reference data 310-3 to be supplied to the comparator unit 300 is computed at run-time and comprises one or more data sets defining encapsulating elements determined on the basis of the vertex data in accordance with vertex specification as supplied to the graphics pipeline.

In an operation S200, the vertex data of the vertex specification as supplied to the graphics pipeline is provided and at least a subset of vertex data is selected from the provided vertex data in an operation S210. The selected subset of vertex data based on the vertex specification forms the subset of reference vertex data. The vertices of the reference vertex data correspond to the untransformed vertices, on the basis of which the vertex shader unit 225 generates the subset of transformed vertex data stored in the buffer.

On the basis of the subset of reference vertex data, a set of vertices is identified in an operation S240, which define one or more primitives. Starting from the set of identified set of reference vertices, a reference encapsulating element such as a reference circumscribed ellipsoid/ellipse or a reference two/three dimensional bounding box is determined on the basis of a reference data set defining the location of the reference encapsulating element in application/object space of the vertex data in an operation S250. A reference data set defining the reference encapsulating element is determined.

The identified set of reference vertices correspond to the identified set of transformed vertices, on the basis of which the encapsulating element in window/viewport space is determined.

The operations of identifying a set of reference vertices and determining a reference encapsulating element may be repeated in an operation S260.

One or more reference data sets defining one or more reference encapsulating elements are supplied in an operation S270 to a vertex transform unit 320, which is arranged to generate transformed reference data sets on the basis thereof and to output the transformed reference data sets in an operation S280. The vertex transform unit 320 is arranged to transform the supplied reference data sets in application/object space into the transformed reference data sets in window/viewport space.

The vertex transform unit 320 may be under control of or implemented on the central processing unit 120 of the data processing system 100. The vertex transform unit 320 may be a software component run at the central processing unit 120. The vertex transform unit 320 is configured to perform the same transform operation as the vertex shader unit 225. The vertex transform unit 320 may operate on the basis of the high-level vertex shader program 143, on the basis of which the machine code vertex shader program is generated.

The vertex shader unit 225 may be used as vertex transform unit 320 for generating the transformed reference data sets. The transformed reference data sets may be generated in advance or after generation of the transformed vertex data. A subset of streaming processors 175 may be allocated to generate the transformed vertex data as part of the graphics pipeline processing of the vertex data and at least the remaining part of the streaming processors 175 may be allocated to generate the transformed reference data sets such that the transformed vertex data and the transformed reference data sets are generated at substantially the same time.

Further, the one or more transformed reference data sets are supplied as reference data 310-3 to the comparator unit 300 in an operation S290. The comparator unit 300 is arranged to compare the supplied one or more data sets with the one or more transformed reference data sets and to generate a fault indication signal in case the data sets do not match in an operation S300.

As exemplified in the left-hand column of FIG. 9, the identified set of vertices comprises the vertices $V_0$ to $V_5$ defining a fan of 5 tringles in application/object space. The vertices $V_0$ to $V_5$ are the untransformed ver-

tices correspond to the transformed vertices $V'_0$ to $V'_5$ defining the fan of 5 tringles in window/viewport space. A circumscribed ellipse with minimal area is determined, which circumscribes the vertices $V_0$ to $V_5$. The circumscribed ellipse can be defined by a base point P and a semi-axes vector A. The data set comprising the base point P and the semi-axes vector A is determined on the basis of the vertex data based on the vertex specification as supplied to the vertex shader unit 225.

The reference circumscribed ellipse in application/object space is transformed into a transformed reference circumscribed ellipse in window/viewport space. The base point P and the semi-axes vector A defined in application/object space is transformed into a transformed base point P' and a transformed semi-axes vector A' in window/viewport space. The transformed base point P' and a transformed semi-axes vector A' represents the transformed reference data set defining the transformed reference circumscribed ellipse in window/viewport space.

The transformed reference data set is provided as reference data 301-3 to the comparator unit 300 for comparison thereat.

According to a more general example of the present application, an apparatus for verifying the integrity of transformed vertex data is provided. The apparatus comprises a graphics processing pipeline 200 with a vertex shader unit 225, a buffer 162-3 and a comparator unit 300. The vertex shader unit 225 is configured to receive a stream of vertex data according to a vertex specification. The vertex shader unit 225 is arranged to apply a transformation on each of the vertices in the received stream of vertex data to and to output a stream of transformed vertex data. The buffer 162-3 is coupled to the vertex shader unit 225 and provided to buffer the transformed vertex data output by the vertex shader unit 225. The comparator unit 300 is coupled to the buffer 162-3. The comparator 300 is further configured to verify the integrity of at least a subset of the transformed vertex data on the basis of reference data 310-1, 310-2, 310-3 and to issue a fault indication signal in case the verification fails, e.g. the at least a subset of the transformed vertex data on the basis of reference data 310-1, 310-2, 310-3 mismatch.

According to an example of the present application, the reference data 310-1, 310-2, 310-3 comprises a subset of precomputed transformed reference vertex data 310-1, a subset of transformed reference vertex data computed at run-time 310-2 and/or a transformed reference data set 310-3 relating to one or more encapsulating elements each determined on basis of a set of vertices according to the vertex specification.

According to an example of the present application, the apparatus may further comprise a vertex transform unit 320, which is configured to apply a transformation on a vertex to generate a transformed vertex. The transformation performed by the vertex transform unit 320 is the same transformation or at least substantially the same transformation with respect to the results output thereof as performed by the vertex shader unit 225. The vertex transform unit 320 is coupled to the comparator unit 300 to receive vertex data from the comparator unit 300 and to output transformed vertex data to the comparator unit 300.

According to an example of the present application, the comparator unit 300 is further arranged to receive at least a subset of vertex data according to the vertex specification forming a subset of reference vertex data.

The comparator unit 300 is further configured to supply the subset of reference vertex data to the vertex transform unit 320, which outputs a subset of transformed reference vertex data to the comparator unit 300; to compare the subset of transformed reference vertex data with the subset of transformed vertex data from the buffer 162-3; and to issue the fault indication signal in case the vertices of the subsets mismatch with each other.

According to an example of the present application, the comparator unit 300 is further arranged to receive at least a subset of vertex data according to the vertex specification forming a subset of reference vertex data. The comparator unit 300 is configured to determine at least one encapsulating element on the basis of a set of transformed vertices out of the subset of transformed vertex data from the buffer 162-3; to determine at least one reference encapsulating element on the basis of a set of vertices out of the subset of reference vertex data; to supply the reference vertex data set to the vertex transform unit 320, which outputs a transformed reference vertex data set to the comparator unit 300; to compare the vertex data set with the transformed reference vertex data set; and to issue the fault indication signal in case the data sets mismatch with each other. The at least one encapsulating element is defined on a vertex data set. The at least one reference encapsulating element is defined on a reference vertex data set.

According to an example of the present application, the encapsulating element is at least one of an ellipse, an ellipsoid, a two-dimensional bounding box and a three-dimensional bounding box.

According to an example of the present application, the encapsulating element is one of a circumscribed encapsulating element and inscribed encapsulating element.

According to an example of the present application, the apparatus may further comprise a data assembler 220 arranged upstream to the vertex shader unit 225 in the graphics processing pipeline 200 and coupled to the vertex shader unit 225. The data assembler 220 is arranged generate the stream of vertex data comprising vertices on the basis of the vertex specification.

According to an example of the present application, the buffer 162-3 is a feedback buffer of the graphics processing pipeline 200.

According to an example of the present application, a method for verifying the integrity of transformed vertex data generated by a graphics pipeline is provided. The method comprises buffering transformed vertex data output by a vertex shader unit 225, which receives a stream of vertex data according to a vertex specification. The vertex shader unit 225 is arranged perform applying a transformation on each of the vertices in the received stream of vertex data and outputting a stream of transformed vertex data. The vertex shader unit 225 is part of a graphics processing pipeline 200. The method further comprises verifying the integrity of at least a subset of the transformed vertex data on the basis of reference data 310-1, 310-2, 310-3; and issuing a fault indication signal in case the verification fails, e.g. in case that the at least a subset of the transformed vertex data and the reference data 310-1, 310-2, 310-3 mismatch with each other.

According to an example of the present application, the method further comprises providing a subset of precomputed transformed reference vertex data as reference data 310-1; generating at run-time a subset of transformed reference vertex data as reference data 310-2; and generating at run-time a transformed reference data set relating to one or more encapsulating elements each determined on basis of a set of vertices according to the vertex specification as reference data 310-3.

According to an example of the present application, the method further comprises providing a vertex transform unit 320, which is configured to perform applying a transformation on a vertex to generate a transformed vertex. The transformation performed by the vertex transform unit 320 is the same transformation as performed by the vertex shader unit 225 or at least the same transformation with respect to the results output thereof.

According to an example of the present application, the method further comprises receiving S210 at least a subset of vertex data according to the vertex specification forming a subset of reference vertex data; supplying S220 the subset of reference vertex data to the vertex transform unit 320, which outputs a subset of transformed reference vertex data; comparing S300 the subset of transformed reference vertex data with the subset of transformed vertex data; and issuing S300 the fault indication signal in case the vertices of the subsets mismatch with each other.

According to an example of the present application, the method further comprises receiving S210 at least a subset of vertex data according to the vertex specification forming a subset of reference vertex data; determining S140 at least one encapsulating element on the basis of a set of transformed vertices out of the subset of transformed vertex data, wherein the at least one encapsulating element is defined on a vertex data set; determining S250 at least one reference encapsulating element on the basis of a set of vertices out of the subset of reference vertex data, wherein the at least one reference encapsulating element is defined on a reference vertex data set; supplying S280 the reference vertex data set to the vertex transform unit 320, which outputs a transformed reference vertex data set to the comparator unit 300; comparing S300 the vertex data set with the transformed reference vertex data set; and issuing S300 the fault indication signal in case the data sets mismatch with each other.

According to an example of the present application, the determining the encapsulating element and the reference encapsulating element further comprises determining the encapsulating element and the reference encapsulating element to have a shape of at least one of an ellipse, an ellipsoid, a two-dimensional bounding box and a three-dimensional bounding box.

According to an example of the present application, the determining the encapsulating element and the reference encapsulating element further comprises determining the encapsulating element and the reference encapsulating element to circumscribe space defined by the set of vertices or inscribe in the space defined by the set of vertices.

According to an example of the present application, the method further comprises generating the stream of vertex data comprising vertices on the basis of the vertex specification; and supplying the stream of vertex data to the vertex shader unit 225 in the graphics processing pipeline 200.

According to an example of the present application, a non-transitory, tangible computer readable storage medium is provided bearing computer executable instructions for verifying the integrity of transformed vertex data generated by a graphics pipeline, wherein the instructions, when executing on one or more processing devices, cause the one or more processing devices to perform a method comprising: buffering transformed vertex data output by a vertex shader unit 225, which is configured to receive a stream of vertex data according to a vertex specification and is arranged to perform applying a transformation on each of the vertices in the received stream of vertex data and outputting a stream of transformed vertex data; verifying the integrity of at least a subset of the transformed vertex data on the basis of reference data 310-1, 310-2, 310-3; and issuing a fault indication signal in case the verification fails. The vertex shader unit 225 is part of a graphics processing pipeline 200.

Descriptions made above with reference to FIG. 1 through FIG. 9 may be applied to the present embodiment as is and thus, further detailed descriptions will be omitted here.

The processing method and apparatus according to the above-described examples may use one or more processors, which may include a microprocessor, central processing unit (CPU), digital signal processor (DSP), or application-specific integrated circuit (ASIC), as well as portions or combinations of these and other processing devices.

The examples described herein refer to flowchart illustrations of the apparatus and method for graphics processing using a comparator unit. It will be understood that each block of the flowchart illustrations, and combinations of blocks in the flowchart illustrations, can be implemented by computer program instructions. These computer program instructions can be provided to one or more processors of a general purpose computer, special purpose computer, or other programmable data processing apparatus to produce a machine, such that the instructions, which execute via the one or more processors of the computer or other programmable data processing apparatus, may implement the functions specified in the flowchart block or blocks.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The terms "module", and "unit," as used herein, may refer to, but is not limited to, a software or hardware component, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

Those of skill in the art would further understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To illustrate clearly this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The processing method according to the above-described examples may be recorded in tangible non-transitory computer-readable media including program instructions to implement various operations embodied by a computer. The media may also include, alone or in combination with the program instructions, data files, data structures, and the like. Examples of tangible, non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.

**Claims**

1. An apparatus for verifying the integrity of transformed vertex data, said apparatus comprising:

   a graphics processing pipeline comprising a vertex shader unit,
   wherein the vertex shader unit is configured to receive a stream of vertex data according to a vertex specification, to apply a transformation on each of the vertices in the received stream of vertex data to and to output a stream of transformed vertex data;
   a buffer coupled to the vertex shader unit and configured to buffer the transformed vertex data output by the vertex shader unit; and
a comparator unit coupled to the buffer, wherein the comparator is configured to verify the integrity of at least a subset of the transformed vertex data on the basis of reference data and to issue a fault indication signal in case the verification fails.

2. The apparatus according to claim 1, wherein the reference data comprises at least one of a subset of precomputed transformed reference vertex data, a subset of transformed reference vertex data computed at run-time and a transformed reference data set relating to one or more encapsulating elements each determined on basis of a set of vertices according to the vertex specification.

3. The apparatus according to any preceding claim, further comprising:

a vertex transform unit configured to apply a transformation on a vertex to generate a transformed vertex, wherein the transformation performed by the vertex transform unit is the same transformation as performed by the vertex shader unit,
wherein the vertex transform unit is coupled to the comparator unit to receive vertex data from the comparator unit and to output transformed vertex data to the comparator unit.

4. The apparatus according to any preceding claim, wherein the comparator unit is further arranged to receive at least a subset of vertex data according to the vertex specification forming a subset of reference vertex data,
wherein the comparator unit is configured

to supply the subset of reference vertex data to the vertex transform unit, which outputs a subset of transformed reference vertex data to the comparator unit,
to compare the subset of transformed reference vertex data with the subset of transformed vertex data from the buffer, and
to issue the fault indication signal in case the vertices of the subsets do not match with each other.

5. The apparatus according to any preceding claim, wherein the comparator unit is further arranged to receive at least a subset of vertex data according to the vertex specification forming a subset of reference vertex data,
wherein the comparator unit is configured

to determine at least one encapsulating element on the basis of a set of transformed vertices out of the subset of transformed vertex data from the buffer, wherein the at least one encapsulating element is defined on a vertex data set,
to determine at least one reference encapsulating element on the basis of a set of vertices out of the subset of reference vertex data, wherein the at least one reference encapsulating element is defined on a reference vertex data set,
to supply the reference vertex data set to the vertex transform unit, which outputs a transformed reference vertex data set to the comparator unit,
to compare the vertex data set with the transformed reference vertex data set, and to issue the fault indication signal in case the data sets do not match with each other.

6. The apparatus according to claim 5, wherein the encapsulating element is at least one of an ellipse, an ellipsoid, a two-dimensional bounding box and a three-dimensional bounding box, or wherein the encapsulating element is one of a circumscribed encapsulating element and inscribed encapsulating element

7. The apparatus according to claim 1, further comprising:

a data assembler arranged upstream to the vertex shader unit in the graphics processing pipeline and coupled to the vertex shader unit, wherein the data assembler is arranged generate the stream of vertex data comprising vertices on the basis of the vertex specification.

8. A method for verifying the integrity of transformed vertex data generated by a graphics pipeline, said method comprising:

buffering transformed vertex data output by a vertex shader unit, which is arranged to perform receiving a stream of vertex data according to a vertex specification, applying a transformation on each of the vertices in the received stream of vertex data and outputting a stream of transformed vertex data, wherein the vertex shader unit is part of a graphics processing pipeline;
verifying the integrity of at least a subset of the transformed vertex data on the basis of reference data; and
issuing a fault indication signal in case the verification fails.

9. The method according to claim 8, further comprising at least one of:

providing a subset of precomputed transformed reference vertex data as reference data;

generating at run-time a subset of transformed reference vertex data as reference data; and generating at run-time a transformed reference data set relating to one or more encapsulating elements each determined on basis of a set of vertices according to the vertex specification as reference data.

10. The method according to claims 8 to 9, further comprising:

    providing a vertex transform unit, which is configured to apply a transformation on a vertex to generate a transformed vertex, wherein the transformation performed by the vertex transform unit is the same transformation as performed by the vertex shader unit.

11. The method according to claims 8 to 10, further comprising:

    receiving at least a subset of vertex data according to the vertex specification forming a subset of reference vertex data,
    supplying the subset of reference vertex data to the vertex transform unit, which outputs a subset of transformed reference vertex data,
    comparing the subset of transformed reference vertex data with the subset of transformed vertex data, and
    issuing the fault indication signal in case the vertices of the subsets mismatch with each other.

12. The method according to claims 8 to 11, further comprising:

    receiving at least a subset of vertex data according to the vertex specification forming a subset of reference vertex data;
    determining at least one encapsulating element on the basis of a set of transformed vertices out of the subset of transformed vertex data, wherein the at least one encapsulating element is defined on a vertex data set;
    determining at least one reference encapsulating element on the basis of a set of vertices out of the subset of reference vertex data, wherein the at least one reference encapsulating element is defined on a reference vertex data set;
    supplying the reference vertex data set to the vertex transform unit, which outputs a transformed reference vertex data set to the comparator unit;
    comparing the vertex data set with the transformed reference vertex data set; and
    issuing the fault indication signal in case the data sets mismatch with each other.

13. The method according to claim 12, wherein determining the encapsulating element and the reference encapsulating element further comprises:

    determining the encapsulating element and the reference encapsulating element to have a shape of at least one of an ellipse, an ellipsoid, a two-dimensional bounding box and a three-dimensional bounding box, or
    determining the encapsulating element and the reference encapsulating element to circumscribe space defined by the set of vertices or inscribe in the space defined by the set of vertices.

14. The method according to claim 8, further comprising:

    generating the stream of vertex data comprising vertices on the basis of the vertex specification; and
    supplying the stream of vertex data to the vertex shader unit in the graphics processing pipeline.

15. A non-transitory, tangible computer readable storage medium bearing computer executable instructions for verifying the integrity of transformed vertex data generated by a graphics pipeline, wherein the instructions, when executing on one or more processing devices, cause the one or more processing devices to perform the method according to any claims 8 to 14.

┌─ 100

**Graphics Processing Subsystem 150**

**GPU Local Memory 160**

**Frame Buffer 161**

**Storage Buffers 162**

| -1 | -2 | -3 |

**Shader Programs 165**

GPU Bus 165

**Graphics Processing Unit (GPU) 170**

**Streaming Multiprocessor 175-1**

⋮

**Streaming Multiprocessor 175-N**

Image coding signal to Display Device 180

System Bus 110

**System Memory 140**

**Application Program 141**

**Application Program Interface 142**

**High-Level Shader Programs 143**

**Graphics Driver 144**

**Central Processing Unit (CPU) 120**

**Data I/O 130**

Fig. 1

Fig. 2 (alternative)

Stream of Vertex Data

For each vertex <u>S10</u>

Transforming into eye coordinate
(Model View)
<u>S11</u>

Transforming into clip coordinate
(Projection)
<u>S12</u>

Transforming into normalized
device coordinates (/w)
<u>S13</u>

Transforming into window
coordinates (Viewport)
<u>S14</u>

Next Vertex? S15

Complete

Stream of Transformed Vertex Data

Fig. 3

EP 3 109 829 A1

Vertex stream

```
Vertex Shader
Unit 225
```

```
Transformed
Vertex Data in
Feedback Buffer 162-3
```

Further processing stages
of the graphics pipeline

```
Precomputed
Reference Data
310-1
```

```
Run-time Computed
Reference Data based on
Vertex Specification
310-2
```

```
Run-time Computed
Reference Data based on
Derived Data
310-3
```

```
Comparator
Unit 300
```

Fault
Indicator

```
Transformed
Vertex Data
305-1
```

```
Derived Data based on
Transformed Vertex
Data  305-2
```

Fig. 4

Static Elements

Dynamic Elements

Fig. 5

Fig. 6

- Storing transformed Vertex Data — S100
- Selecting Subset of Transformed Vertex Data — S110
- Transformed Vertex Data Subset — S120
- Vertex Shader Unit 225
- Vertex Specification
- Comparing → Fault Indicator
- Precomputed Reference Data 310-1 — S300, S230

Fig. 7

- Storing transformed Vertex Data — S100
- Selecting Subset of Transformed Vertex Data — S110
- Transformed Vertex Data Subset — S120
- Vertex Shader Unit 225
- Vertex Specification
- Comparing → Fault Indicator
- Vertex Specification — S200
- Selecting Subset of Vertex Data — S210
- Vertex Transform Unit 320 — S220
- Reference Data 310-2 — S230, S300

S100

Transformed Vertex Data

Vertex Shader Unit 225

Vertex Specification

S110 Selecting Subset of Transformed Vertex Data

S130 Identifying set of transformed vertices

S140 Determining an encapsulating element based on the set of transformed vertices

S150 Repeat?

S170 Data set(s) defining the one or more encompassing element

S200 Vertex Specification

S210 Selecting Subset of Vertex Data

S240 Identifying set of vertices defining one or more primitives

S250 Determining an encapsulating element based on the set of vertices

S260 Repeat?

S270 Data set(s) defining the one or more encapsulating element

S280 Vertex Transform Unit 320

S290 Reference Data 310-3

S300 Comparing

Fault Indicator

Fig. 8

Vertices
in application/object space
from vertex specification

Transformed vertices
in window/viewport space
from vertex shader unit 225

Determining
circumscribed
ellipse

Determining
circumscribed
ellipse

Transforming
circumscribed
ellipse

Comparing data
defining
circumscribed
ellipse

$\overset{?}{=}$

Fig. 9

Europäisches
Patentamt

European
Patent Office

Office européen
des brevets

# EUROPEAN SEARCH REPORT

Application Number

EP 16 17 1160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/188404 A1 (TONG XIN [CN] ET AL) 29 July 2010 (2010-07-29) * paragraphs [0001], [0005], [0020] - [0026], [0032], [0037], [0043] - [0058], [0062] * * figure 3 * | 1-15 | INV. G06T15/00 |
| X | US 5 864 342 A (KAJIYA JAMES T [US] ET AL) 26 January 1999 (1999-01-26) * column 5, line 55 - line 66 * * column 11, line 18 - line 54 * * column 13, line 25 - line 33 * * column 52, line 42 - column 56, line 10 * * figure 22 * | 1-15 | |

-----

-----

TECHNICAL FIELDS
SEARCHED      (IPC)

G06T

The present search report has been drawn up for all claims

| Place of search | Date of completion of the search | Examiner |
|---|---|---|
| Berlin | 10 November 2016 | Kröner, Sabine |

EPO FORM 1503 03.82 (P04C01)

## ANNEX TO THE EUROPEAN SEARCH REPORT
## ON EUROPEAN PATENT APPLICATION NO.

EP 16 17 1160

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2016

| Patent document cited in search report | | Publication date | Patent family member(s) | | Publication date |
|---|---|---|---|---|---|
| US 2010188404 | A1 | 29-07-2010 | CN 102301401 A<br>US 2010188404 A1<br>WO 2010088029 A2 | | 28-12-2011<br>29-07-2010<br>05-08-2010 |
| US 5864342 | A | 26-01-1999 | US 5864342 A<br>US 6326964 B1 | | 26-01-1999<br>04-12-2001 |

EPO FORM P0459

For more details about this annex : see Official Journal of the European Patent Office, No. 12/82